# EUROPÄISCHE PATENTSCHRIFT

(11) **EP 3 106 002 B1**
(45) Veröffentlichungstag und Bekanntmachung des Hinweises auf die Patenterteilung: **28.11.2018**
(21) Anmeldenummer: 15705928.8
(22) Anmeldetag: 05.02.2015
(51) Int. Cl.: H05B 37/02, H04W 84/18

(54) **BELEUCHTUNGSSYSTEM UND VERFAHREN ZUM BETRIEB EINES BELEUCHTUNGSSYSTEMS MIT INTEGRIERTEM SICHERHEITSKONZEPT**
LIGHTING SYSTEM AND METHOD FOR OPERATING A LIGHTING SYSTEM HAVING AN INTEGRATED SAFETY CONCEPT
SYSTÈME D'ÉCLAIRAGE ET PROCÉDÉ D'EXPLOITATION D'UN SYSTÈME D'ÉCLAIRAGE À CONCEPT DE SÉCURITÉ INTÉGRÉ

(30) Priorität: 11.02.2014 DE 102014202445
(43) Veröffentlichungstag der Anmeldung: 21.12.2016
(73) Patentinhaber: Zumtobel Lighting GmbH, 6850 Dornbirn (AT)
(72) Erfinder: SIEGEL, Martin, 88131 Bodolz (DE); WERNER, Walter, 6850 Dornbirn (AT)
(74) Vertreter: Kiwit, Benedikt
(86) Internationale Anmeldenummer: PCT/EP2015/052387
(87) Internationale Veröffentlichungsnummer: WO 2015/121143

(56) Entgegenhaltungen:
- US-A1- 2006 049 935
- US-A1- 2008 203 928

## Beschreibung

Die Erfindung betrifft ein Beleuchtungssystem und ein Betriebsverfahren für Beleuchtungssysteme, welche eine auf sichtbarem Licht basierende Kommunikation nutzen.
Es ist grundsätzlich bekannt, Lichtmanagement-Systeme mittels drahtloser Kommunikation zu steuern. Diese Systeme haben jedoch den Nachteil, dass auch Unberechtigte in das Funksystem eingreifen können bzw. auf dieses Zugreifen können und somit unberechtigter Zugriff bzw. unberechtigte Steuerung des gesamten Systems oder einzelner Leuchten durchgeführt werden kann. Darüber hinaus sind die bekannten Systeme nachteilig, da selbst von einem prinzipiell berechtigten Nutzer versehentlich außerhalb des Sichtbereichs des Nutzers liegende Leuchten gesteuert werden können, obwohl dies nicht dem Willen des Nutzers entspricht oder außerhalb seiner Berechtigung liegt.
Die bekannten Systeme weisen somit eine Zugriffsproblematik auf, wenn beispielsweise von außerhalb auf das System zugegriffen und mehrere Räume angesteuert werden können. Insbesondere wenn ein gesamtes Gebäude mit der Beleuchtungssteuerung angesteuert werden kann, ist dies problematisch. Weiterhin ist es bislang bekannt, einzelnen Nutzergruppen Zugriffsrechte auf bestimmte Räume oder Raumgruppen zu gewähren. Dies erfordert jedoch eine eindeutige Identifizierung der entsprechenden Leuchten und eine manuelle Zuweisung von Benutzerrechten. Mit einem solchen Verfahren kann zwar möglicherweise ein unberechtigter Zugriff verhindert werden, nicht jedoch ein unbeabsichtigter Zugriff. Insbesondere die Fehlbedienung von nicht sichtbaren Leuchten in Nachbarräumen kann so nicht verhindert werden.
So zeigt beispielsweise die deutsche Offenlegungsschrift DE 10 2011 007 416 A1 ein entsprechendes Beleuchtungssystem mit Steuerung der Leuchten mittels Funk. US 2006/0049935 A1 offenbart ein Verfahren zur kabellosen Steuerung von Leuchten, wobei das von einer Leuchteneinheit emittierte Licht einen ID-Code der jeweiligen Leuchteneinheit trägt. Der Erfindung liegt die Aufgabe zu Grunde, ein Beleuchtungssystem und ein Verfahren zum Betrieb eines Beleuchtungssystems bereitzustellen, welche eine unberechtigte Steuerung und eine unbeabsichtigte Steuerung verhindern und gleichzeitig eine einfache und intuitive Steuerung ermöglichen.

Die Aufgabe wird erfindungsgemäß für die Vorrichtung durch die Merkmale des unabhängigen Anspruchs 1 und für das Verfahren durch die Merkmale des unabhängigen Anspruchs 15 gelöst. Vorteilhafte Weiterbildungen sind Gegenstand der hierauf rückbezogenen Unteransprüche.

Ein erfindungsgemäßes Beleuchtungssystem beinhaltet ein Bediengerät und eine Mehrzahl von Leuchten. Das Bediengerät dient dabei der Steuerung der Leuchten und ist vorzugsweise als mobiles Gerät (bspw. Smartphone vorzugsweise inkl. entsprechender App) ausgebildet. Jede der Leuchten weist eine Identifikations-Sende-Einheit auf, welche dazu dient, die jeweilige Leuchte zumindest zeitweilig derart zu steuern, dass die jeweilige Leuchte ein eindeutig zu identifizierendes Identifikations-Lichtsignal abgibt. In das Bediengerät ist eine Identifikations-Empfangs-Einheit (bspw. eine Kamera) integriert, welche die Identifikations-Lichtsignale der Leuchten empfängt. Das Beleuchtungssystem ist dabei derart ausgebildet, dass lediglich Leuchten steuerbar sind, deren Identifikations-Lichtsignal gegenwärtig - also zum Zeitpunkt der Abgabe eines Steuersignals - von der Identifikations-Empfangs-Einheit des Bediengeräts empfangen wird oder innerhalb eines definierten Zeitraums (erster Zeitraum) davor empfangen wurde. So wird sichergestellt, dass einerseits nur Leuchten im Sichtbereich des Bediengeräts gesteuert werden können und andererseits nur Personen mit räumlichem Zugang eine Steuerung der Leuchten durchführen können.

Unter einem "definierten Zeitraum" wird im Rahmen der Erfindung insbesondere ein Zeitraum verstanden, der beispielsweise Leuchten-spezifisch (also für jede Leuchte individuell festgelegt) oder (wenigstens teilweise) Leuchten-übergreifend (also für mehrere oder alle Leuchten gemeinsam festgelegt) vorbestimmt - also vorher festgelegt - ist oder der beispielsweise situationsabhängig (automatisch) bestimmt wird; bspw. aufgrund einer Position einer Leuchte im Raum, einer erfassten Ansteuerung einer Leuchte, des Bediengeräts selbst (bspw. durch Bediengerätspezifische Ansteuerungsrechte), (Uhr-)Zeit-abhängig, etc..

Mit dem erfindungsgemäßen System wird aufgrund einer Verknüpfung von (drahtloser) Lichtsteuerung (bspw. auf Funkbasis) mit einer Kommunikation auf Basis optischer Signale (bspw. Visible Light Communication (VLC)) ein zusätzliches Sicherheitsmerkmal bereitgestellt, welches eine eindeutige Zuordnung zwischen Benutzer, Leuchte und Raum ermöglicht, die ein einfaches und in sich geschlossenes Zugriffs- und Sicherheitssystem zur Lichtsteuerung bietet. Gleichzeit kann sichergestellt werden, dass es zu keiner Ausführung von unberechtigten oder ungewollten Steuerbefehlen kommt, wenn bspw. der Benutzer Leuchten in einem entfernten Raum ansteuern will.

Vorzugsweise weist das Beleuchtungssystem weiterhin eine Datenbank auf, in welcher die Identifikations-Lichtsignale und/oder hiervon abgeleitete Signale (bspw. digitale Signale) der jeweiligen Leuchten und zusätzliche Informationen der jeweiligen Leuchten abgespeichert sind. Das Bediengerät ist dann ausgebildet, um nach einem Empfang eines Identifikations-Lichtsignals mittels einer Abfrage der Datenbank zumindest einen Teil der zusätzlichen Informationen der jeweiligen Leuchten abzurufen und/oder ausschließlich eine dem Identifikations-Lichtsignal bzw. dem abgeleiteten Signal eindeutig - vorzugsweise in der Datenbank - zugeordnete Leuchte (10 - 18) zu steuern. So können sehr einfach Berechtigungen zum Steuern der Leuchten geprüft werden und nur diejenigen Leuchten angesteuert werden, welche durch Abgleich von Signalen oder Signalinformationen bspw. mittels in einer Datenbank abgelegter Informationen als in der gegebenen Situation ansteuerbar authentifiziert wurden.

Vorzugsweise beinhalten die zusätzlichen Informationen der jeweiligen Leuchten eine Leuchtenadressierung. Das Bediengerät ist dann ausgebildet, um die jeweilige Leuchte anhand ihrer Leuchtenadressierung zu steuern. So kann sehr einfach ohne Vorkenntnisse über die Leuchte eine Steuerung der Leuchte erfolgen.

Bevorzugt beinhalten die zusätzlichen Informationen der jeweiligen Leuchten eine Position der Leuchte. Das Bediengerät verfügt in diesem Fall über eine Anzeigeeinheit, welche ausgebildet ist, um die Positionen der Leuchten anzuzeigen. So ist eine sehr intuitive Bedienung möglich.

Vorzugsweise beinhalten die zusätzlichen Informationen der jeweiligen Leuchten verfügbare Steuermöglichkeiten der Leuchte. Die Steuermöglichkeiten sind dann ein Schaltzustand und/oder ein Dimmzustand und/oder eine Farbtemperatur und/oder ein Beleuchtungsablauf. Das Bediengerät ist dann ausgebildet, um lediglich für die jeweilige Leuchte verfügbare Steuermöglichkeiten mittels einer Anzeigeeinheit anzuzeigen. Dies verbessert die Übersichtlichkeit der Darstellung und vereinfacht so die Bedienung.

Bevorzugt verfügt das Bediengerät über eine drahtlose Kommunikationsschnittstelle. Die Steuerung der Leuchten durch das Bediengerät erfolgt dann mittels der drahtlosen Kommunikationsschnittstelle des Bediengeräts. So ist eine mobile Bedienung möglich. Beispielsweise ein Smartphone mit entsprechender App und WLAN-Modul kann als ein solches Bediengerät dienen.

Vorteilhafterweise ist das Bediengerät ausgebildet, um eine Steuerung lediglich von Leuchten durchzuführen, deren jeweiliges Identifikations-Lichtsignal das Bediengerät gerade empfängt. So kann eine Fehlbedienung von nicht im Sichtbereich liegenden Leuchten vermieden werden.

Vorzugsweise kann das Bediengerät ausgebildet sein, um Steuerbefehle zur Steuerung der Leuchten sowie von den empfangenen Identifikations-Lichtsignalen abgeleitete Signale mittels der Kommunikationsschnittstelle des Bediengerätes an eine mit den Leuchten steuerungstechnisch korrespondierende Kommunikationsschnittstelle (bspw. eines (zentralen) Steuergerätes oder der Leuchten selbst) zu senden. Das Beleuchtungssystem ist dann derart ausgebildet, um eine Steuerung einer Leuchte durch das Bediengerät nur dann zu akzeptieren, wenn das abgeleitete Signal dem Identifikations-Lichtsignal dieser Leuchte eindeutig zuordenbar ist, wobei das abgeleitete Signal vorzugsweise basierend auf der im Beleuchtungssystem hinterlegten Datenbank (43) eindeutig einer zu steuernden Leuchte oder ihrem Identifikations-Lichtsignal zuordenbar ist. Auf diese Weise kann sich bekannter, vorzugsweise drahtloser Kommunikationsschnittstellen bedient werden, um eine sichere Authentifizierung und Steuerung von Leuchten innerhalb eines räumlichen Berechtigungsbereichs durchzuführen.

Bevorzugt verfügen die Leuchten jeweils über eine drahtlose Kommunikationsschnittstelle (bspw. WLAN-Modul). Die Steuerung der Leuchten durch das Bediengerät erfolgt dann direkt mittels der drahtlosen Kommunikationsschnittstellen des Bediengeräts und der Leuchten. So kann insbesondere bei kleinen Installationen mit wenigen Leuchten auf ein aufwendiges zentrales Steuergerät verzichtet werden. Das Empfangsmodul der Leuchte kann dabei ihr eigenes Frequenzmuster erkennen und kann in diesem Fall gemäß den Steuerbefehlen des Bediengerätes angesteuert werden.

Bevorzugt ist das Bediengerät dabei ausgebildet, um mittels der drahtlosen Kommunikationsschnittstellen von empfangenen Identifikations-Lichtsignalen abgeleitete Signale an die Leuchten zu senden. Die Leuchten sind dann ausgebildet, um eine Steuerung durch das Bediengerät nur dann zu akzeptieren, wenn die jeweilige Leuchte ein von dem von ihr ausgesendeten Identifikations-Lichtsignal abgeleitetes Signal empfängt. So kann eine Fehlbedienung noch zuverlässiger vermieden werden.

Vorteilhafterweise sind die Leuchten ausgebildet, um bei einer Steuerung der jeweiligen Leuchte ausgehend von einem ausgeschalteten Zustand der Leuchte unabhängig von einer Übermittlung eines von dem zugehörigen Identifikations-Lichtsignal abgeleiteten Signals für einen zweiten Zeitraum in einen eingeschalteten Zustand zu schalten, und währenddessen mittels der Identifikations-Sende-Einheit der Leuchte das Identifikations-Lichtsignal auszusenden, und erneut in den ausgeschalteten Zustand zu wechseln, wenn bis zum Ende des zweiten Zeitraums keine Übermittlung eines von dem zugehörigen Identifikations-Lichtsignal abgeleiteten Signals erfolgt ist. So kann auch ausgehend von einer ausgeschalteten Leuchte eine Bedienung erfolgen, gleichzeitig jedoch eine Fehlbedienung vermieden werden.

Optional sind die Leuchten dann ausgebildet, um nach einem Verstreichen des zweiten Zeitraums während eines auf den zweiten Zeitraum vorzugsweise direkt folgenden dritten Zeitraums nicht auf eine Steuerung durch das Bediengerät zu reagieren. So wird erreicht, dass ein unberechtigter Nutzer nicht ohne Weiteres mehrfach hintereinander eine Leuchte anschalten bzw. steuern kann.

In einer alternativen Ausgestaltung weist das Beleuchtungssystem ein Steuergerät auf, welches eine drahtlose Kommunikationsschnittstelle (bspw. WLAN-Modul) zur Kommunikation mit dem Bediengerät aufweist. Das Steuergerät ist dann ausgebildet, um die Leuchten direkt zu steuern, während das Bediengerät ausgebildet ist, um mittelbar über das Steuergerät die Leuchten zu steuern. Das Bediengerät ist dann ausgebildet, um mittels der drahtlosen Kommunikationsschnittstellen von empfangenen Identifikations-Lichtsignalen abgeleitete Signale an das Steuergerät zu senden. Das Steuergerät ist in diesem Fall ausgebildet, um eine Leuchte lediglich dann zu steuern, wenn das Steuergerät ein von dem ausgesendeten Identifikations-Lichtsignal der Leuchte abgeleitetes Signal empfängt. So wird eine unberechtigte Bedienung ebenfalls ausgeschlossen. Ein System mit zentralem Steuergerät ist insbesondere bei großen Installationen mit zahlreichen Leuchten sinnvoll, da dann auf aufwendige drahtlose Kommunikationsschnittstellen in den Leuchten verzichtet werden kann.

Bevorzugt ist das Steuergerät ausgebildet, um bei einer Bedienung der jeweiligen Leuchte durch das Bediengerät ausgehend von einem ausgeschalteten Zustand der Leuchte unabhängig von einer Übermittlung eines von dem zugehörigen Identifikations-Lichtsignal abgeleiteten Signals die Leuchte für einen zweiten Zeitraum in einen eingeschalteten Zustand zu schalten. Die Leuchte ist dann ausgebildet, um währenddessen mittels der Identifikations-Sende-Einheit ihr Identifikations-Lichtsignal auszusenden. Die Leuchte wird erneut in den ausgeschalteten Zustand geschaltet, wenn bis zum Ende des zweiten Zeitraums keine Übermittlung eines von dem zugehörigen Identifikations-Lichtsignal abgeleiteten Signals durch das Bediengerät erfolgt ist. So wird eine unberechtigte Bedienung auch ausgehend von einem ausgeschalteten Zustand der Leuchte vermieden.

Optional ist das Steuergerät ausgebildet, um nach einem Verstreichen des zweiten Zeitraums während eines auf den zweiten Zeitraum vorzugsweise direkt folgenden dritten Zeitraums nicht auf eine Bedienung der Leuchten durch das Bediengerät zu reagieren. So wird eine fortlaufende Ansteuerung eines unberechtigten Nutzers erschwert bzw. vermieden.

Bevorzugt ist das Beleuchtungssystem derart ausgebildet, dass nur Leuchten steuerbar sind, deren jeweilige Identifikations-Lichtsignale von der Identifikations-Empfangs-Einheit des Bediengeräts mit einer Lichtintensität empfangen werden, welche größer als ein vorbestimmter Schwellwert ist. So wird eine Fehlbedienung bei optisch verbundenen Räumen vermieden. Auch eine Einstellung dieses Schwellwerts durch den Nutzer ist denkbar.

Ein erfindungsgemäßes Verfahren dient dem Betreiben eines Beleuchtungssystems mit einem Bediengerät und einer Mehrzahl von Leuchten. Das Bediengerät steuert dabei die Leuchten. Die Leuchten geben zumindest zeitweilig ein die jeweilige Leuchte eindeutig identifizierendes Identifikations-Lichtsignal ab. Identifikations-Lichtsignale der Leuchten werden von dem Bediengerät empfangen. Das Bediengerät steuert lediglich Leuchten, deren Identifikations-Lichtsignal zum Zeitpunkt der Abgabe eines Steuersignals zum Steuern der Leuchten oder innerhalb eines definierten Zeitraums davor von dem Bediengerät empfangen wird. So wird zuverlässig eine Fehlbedienung vermieden.

Nachfolgend wird die Erfindung anhand der Zeichnungen, in der ein vorteilhaftes Ausführungsbeispiel der Erfindung dargestellt ist, beispielhaft beschrieben. In den Zeichnungen zeigen:
- Fig. 1: ein Ausführungsbeispiel des erfindungsgemäßen Beleuchtungssystems in einer Draufsicht;
- Fig. 2: eine erste Detailansicht des Ausführungsbeispiels des erfindungsgemäßen Beleuchtungssystems in einem Blockschaltbild;
- Fig. 3: eine zweite Detailansicht des Ausführungsbeispiels des erfindungsgemäßen Beleuchtungssystems in einem Blockschaltbild;
- Fig. 4: eine dritte Detailansicht des Ausführungsbeispiels des erfindungsgemäßen Beleuchtungssystems in einem Blockschaltbild;
- Fig. 5: ein erstes Ausführungsbeispiel des erfindungsgemäßen Verfahrens in einem Flussdiagramm, und
- Fig. 6: ein zweites Ausführungsbeispiel des erfindungsgemäßen Verfahrens in einem Flussdiagramm.

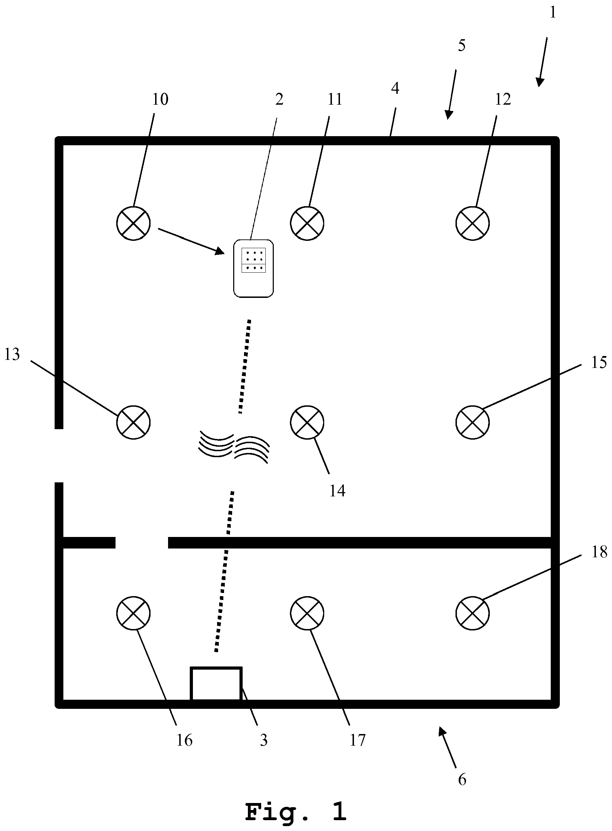

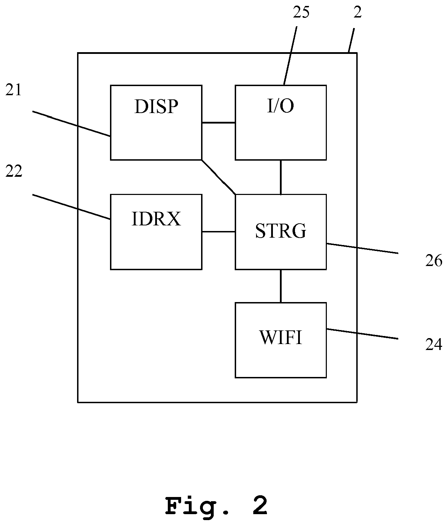

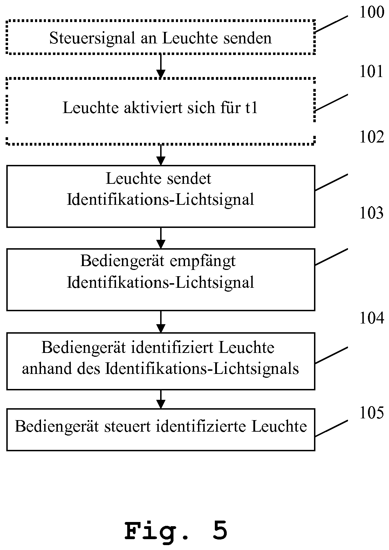

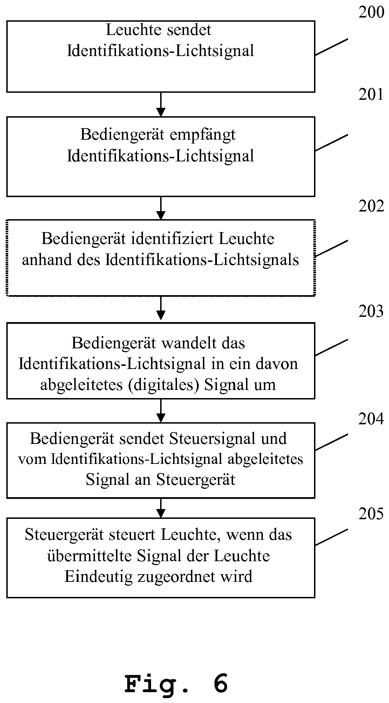

Zunächst wird anhand der Fig. 1 die zu Grunde liegende Problematik und der generelle Aufbau eines Ausführungsbeispiels des erfindungsgemäßen Beleuchtungssystems gezeigt. Mittels Fig. 2 - 4 wird anschließend der detaillierte Aufbau und die detaillierte Funktionsweise des Ausführungsbeispiels erläutert. Abschließend wird anhand von Fig. 5 und Fig. 6 im Detail auf die Funktionsweise von Ausführungsbeispielen des erfindungsgemäßen Verfahrens eingegangen. Identische Elemente wurden in ähnlichen Abbildungen zum Teil nicht wiederholt dargestellt und beschrieben.

In Fig. 1 ist ein Ausführungsbeispiel des erfindungsgemäßen Beleuchtungssystems 1 in einer Draufsicht dargestellt. Das Beleuchtungssystem 1 beinhaltet ein Bediengerät 2, vorzugsweise ein Steuergerät 3, und eine Mehrzahl von Leuchten 10 - 18. Das Beleuchtungssystem 1 ist dabei vorzugsweise in einem Gebäude 4 mit einem ersten Raum 5 und einem zweiten Raum 6 angeordnet. Die Leuchten 10 - 15 sind im ersten Raum 5 angeordnet, während die Leuchten 16 - 18 im zweiten Raum 6 angeordnet sind. Das Bediengerät 2 befindet sich gegenwärtig in dem ersten Raum 4. Es handelt sich vorzugsweise um ein mobiles Bediengerät, wie z.B. ein Tablet-PC, ein Smartphone, etc.. Das Steuergerät 3 ist in dem hier gezeigten Ausführungsbeispiel in dem zweiten Raum 6 angeordnet. Bei diesem handelt es sich üblicherweise um ein fest installiertes (zentrales) Steuergerät. Die Leuchten 10 - 18 sind vorzugsweise mittels einer drahtgebundenen Verbindung mit dem Steuergerät 3 verbunden, wobei grundsätzlich auch eine drahtlose Verbindung bspw. via im Steuergerät und den Leuchten vorhandene WLAN-Module denkbar ist. Vorzugsweise kommt ein BusSystem, z.B. nach dem DALI Standard, zum Einsatz. Das Bediengerät 2 und das Steuergerät 3 sind vorzugsweise mittels einer drahtlosen Verbindung miteinander verbunden. Das Bediengerät 2 befindet sich dabei in direkter Sichtweite der Leuchten 10 - 15. Zusätzlich kann es Licht von der Leuchte 16 aus dem über einen Durchgang verbundenen zweiten Raum 6 empfangen.

Die Leuchten 10 - 18 beinhalten jeweils eine Identifikations-Sende-Einheit, welche die jeweilige Leuchte dazu veranlasst, zumindest zeitweise ein Identifikations-Lichtsignal auszusenden, anhand dessen die jeweilige Leuchte 10 - 18 eindeutig identifiziert werden kann. Diese Identifikations-Lichtsignale werden von dem Bediengerät 2 mittels einer Identifikations-Empfangs-Einheit empfangen.

In einer einfachsten Ausgestaltung des Beleuchtungssystems steuert das Bediengerät 2 lediglich Leuchten 10 - 18, deren Identifikations-Lichtsignale von dem Bediengerät 2 gerade empfangen werden. In dem hier gezeigten Ausführungsbeispiel erfolgt die Steuerung dabei mittels der drahtlosen Kommunikationsschnittstelle und dem Steuergerät 3. Eine derartige Ausgestaltung verhindert, wie im Folgenden ausführlich dargelegt wird, eine unberechtigte und/oder versehentliche Fehlbedienungen, da beispielsweise die Identifikations-Lichtsignale der Leuchten 17 und 18, welche sich abgeschattet im zweiten Raum 6 befinden, von dem Bediengerät 2 nicht empfangen werden können.

Durch eine Authentifizierung zwischen dem Bediengerät 2 und der jeweiligen Leuchte 10 - 18 kann hierbei zuverlässig ein unberechtigter Zugriff vermieden werden. In diesem Fall sendet das Bediengerät 2 gemeinsam mit einem Bediensignal ein von dem Identifikations-Lichtsignal der Leuchte abgeleitetes Signal an das Steuergerät. Das Steuergerät überprüft ob das Identifikations-Lichtsignal bzw. das entsprechend abgeleitete Signal zu der gewünschten Steuerung einer Leuchte passt und steuert dann ausschließlich die den Signalen zugeordnete(n) Leuchte(n). In einem Ausführungsbeispiel ohne zentrales Steuergerät 3 kann das Bediengerät das Signal (entweder ein abgeleitetes Signal oder aber auch ein (identisches) Identifikations-Lichtsignal) direkt an die jeweilige Leuchte, welche das Signal (bspw. mittels entsprechender Sensorik) empfängt und die Überprüfung durchführt.

Um sicherzustellen, dass nicht versehentlich in einem optisch teilweise verbundenen Raum befindliche Leuchten gesteuert werden, ist das Bediengerät 2 vorzugsweise derart ausgebildet, das es lediglich Leuchten 10 - 18 steuert, deren Identifikations-Lichtsignale mit zumindest einem bestimmten Lichtpegel (Lichtintensität o.ä.) oberhalb eines vorbestimmten Schwellwerts empfangen wird. In dem hier dargestellten Ausführungsbeispiel ist dies insbesondere bei der Leuchte 16 relevant, da diese durch den Durchgang von dem ersten Raum 5 aus für das Bediengerät 2 sichtbar ist.

Bevorzugt weist das Beleuchtungssystem 1 weiterhin eine Datenbank auf, in der neben den Identifikations-Lichtsignalen der jeweiligen Leuchten auch zusätzliche Informationen die jeweiligen Leuchten betreffend abgespeichert sein können. So können dort beispielsweise die Positionen der Leuchten 10 - 18 (bspw. in einem Anlagenabbild) aber auch mögliche Steuermöglichkeiten der jeweiligen Leuchten 10 - 18 abgespeichert sein. Dabei kann es sich z.B. um einen Schaltzustand und/oder einen Dimmzustand und/oder eine Farbtemperatur und/oder einen Beleuchtungsablauf handeln. Darüber hinaus kann in dieser Datenbank eine Leuchtenadressierung zur Steuerung der Leuchte gespeichert sein. Sobald das Bediengerät 2 mittels seiner Identifikations-Empfangs-Einheit somit das Identifikations-Lichtsignal der jeweiligen Leuchte 10 - 18 empfangen hat, führt es eine Datenbankabfrage durch, um die dem Identifikations-Lichtsignal zugeordnete und somit in der entsprechenden Situation steuerbare Leuchte 10 - 18 zu ermitteln, anzuzeigen und/oder anzusteuern und kann darüber hinaus die zusätzlichen Informationen ermitteln und vorzugsweise optisch wiedergeben. Basierend auf der Leuchtenadressierung kann die Leuchte direkt angesteuert werden. Mittels der Positionsinformationen, kann das Bediengerät 2 auf einer Anzeigeeinheit die genauen Positionen der Leuchten im Raum darstellen. Mittels der Informationen zu den Steuermöglichkeiten kann das Bediengerät 2 auf einer Anzeigeeinheit lediglich die möglichen Steuermöglichkeiten der jeweiligen Leuchte darstellen und so die Darstellung vereinfachen.

Alternativ ist es auch denkbar, dass die Datenbank dem Steuergerät 3 zugeordnet ist. In diesem Fall findet ein Abgleich zwischen dem von dem Bediengerät 2 empfangenen Identifikations-Lichtsignal oder dem entsprechend davon abgeleiteten Signal mit den Datenbankinformationen statt. Auf Basis dieser Abfrage wird/werden die für eine Ansteuerung berechtigten Leuchten identifiziert und zur Ansteuerung authentifiziert. So wird es dem Bediener mit Hilfe des Bediengeräts 2 ermöglicht, über das Steuergerät eine eindeutig zugeordnete und authentifizierte Leuchte anzusteuern. Das Ansteuersignal kann dann bspw. von dem Steuergerät 3 via DALI an die berechtigte(n) Leuchte(n) 10 - 18 übermittelt werden, die daraufhin die vom Bediengerät abgesetzten entsprechenden Steuerbefehle ausführen.

Bei den genutzten Lichtsignalen handelt es sich um moduliertes sichtbares Licht. Insbesondere bei den Lichtsignalen der Leuchten 10 - 18 handelt es sich bei den Identifikations-Lichtsignalen um eine Modulation des ohnehin zur Beleuchtung ausgesendeten Lichts der Leuchten 10 - 18. Vorzugsweise kann es sich dabei um Visible Light Communication (VLC) Signale handeln.

Soll eine Steuerung von Leuchten 10 - 18 erfolgen, welche zuvor ausgeschaltet sind, so bewirkt das Bediengerät 2 mit einem Steuerversuch ein kurzzeitiges Einschalten der jeweiligen (evtl. am Bediengerät gezielt (manuell) ausgewählten) Leuchte 10 - 18 für einen zweiten kurzen Zeitraum. Während dieses zweiten Zeitraums sendet die Leuchte mittels ihrer Identifikations-Sende-Einheit ihr Identifikations-Lichtsignal aus. Wenn während dieses zweiten Zeitraums eine erfolgreiche Übermittlung eines von dem Identifikations-Lichtsignal abgeleiteten Signals durch das Bediengerät 2 zustande kommt, wie dies zuvor beschrieben ist, so wird die Steuerung von der zuvor ausgeschalteten Leuchte 10 - 18 akzeptiert. Andernfalls deaktiviert sich die Leuchte 10 - 18 nach diesem zweiten Zeitraum wieder und reagiert vorzugsweise erst nach einem weiteren dritten Zeitraum wieder auf einen weiteren Steuerversuch durch das bestimmte Bediengerät 2. Dadurch wird sichergestellt, dass ein unberechtigter Nutzer nicht beliebig viele Versuche zur Steuerung der Leuchten und damit zum "Erraten" des Identifikations-Lichtsignals hat.

Eine Steuerung der Leuchten 10 - 18 ist somit - wie hier dargestellt - über die drahtlose Schnittstelle und das Steuergerät 3 möglich. Alternativ können die Leuchten auch über eigene drahtlose Kommunikationsschnittstellen verfügen. Die Steuerung erfolgt dann direkt ohne das Steuergerät 3. In diesem Fall ist vorzugsweise eine vorbeschrieben Datenbank in dem Bediengerät 2 selbst abgelegt oder das Bediengerät sendet zur Authentifizierung ein identisches Identifikations-Lichtsignal aus. Eine App auf einem Smartphone als Bediengerät kann die Steuerung der Leuchten mit oder ohne zwischengeschaltetem Steuergerät vereinfachen.

In einer weiteren bevorzugten Ausgestaltung ist eine Bedienung nicht nur dann möglich, wenn die Identifikations-Empfangs-Einheit 22 des Bediengerätes 2 aktuell - also zum Zeitpunkt der Abgabe eines Steuersignals zum Steuern der Leuchte(n) 10 - 18 - das/die entsprechende(n) Identifikations-Lichtsignal(e) empfängt, sondern beispielsweise auch nach einem Verlassen eines Bereichs, in welchem ein entsprechendes Identifikations-Lichtsignal empfangbar ist. Eine Bedienung/Steuerung der Leuchte(n) 10 - 18 wird in diesem Fall auch akzeptiert, wenn die Bedienung/Steuerung - also die Abgabe eines Steuersignals - innerhalb eines definierten (ersten) Zeitraumes nach einem letztmaligen Empfang eines Identifikations-Lichtsignals erfolgt ist. Der erste Zeitraum beträgt hierbei höchstens 10 Minuten, bevorzugt höchstens 1 Minute, besonders bevorzugt höchstens 20 Sekunden. Der erste Zeitraum kann beispielsweise automatisch oder von einem Nutzer einstellbar oder vorgegeben sein. Aufgrund dieser Ausgestaltungsform ist es einerseits möglich, wie zuvor beschrieben, Leuchten 10 - 18 auch noch nach dem Verlassen eines Bereichs, in dem entsprechende Identifikations-Lichtsignale empfangbar sind, anzusteuern. Andererseits wird somit beispielsweise auch die Flexibilität bzgl. der Ansteuerung ausgeschalteter Leuchten erhöht, da eine Möglichkeit geschaffen wird, mit einem bereits im Bereich der anzusteuernden Leuchte(n) 10 - 18 in der Vergangenheit "autorisiertes" Bediengerät 2 direkt zum Ansteuern bzw. zur Inbetriebnahme ausgeschalteter Leuchten 10 - 18 zu verwenden. In diesem Fall kann der definierte Zeitraum auch ein Zeitraum sein, der sich bis zu einem letztmaligen Betrieb der entsprechenden Leuchte 10 - 18 erstreckt.

In Fig. 2 ist eine erste Teilansicht des Ausführungsbeispiels des erfindungsgemäßen Beleuchtungssystems dargestellt. Hier dargestellt ist ein Blockschaltbild des Bediengeräts 2. Das Bediengerät 2 beinhaltet vorzugsweise eine Steuereinrichtung 26, welche vorzugsweise verbunden ist mit einer Eingabe-Ausgabe-Einrichtung 25, einer Anzeige-Einrichtung 21, einer Identifikations-Empfangs-Einheit 22 und einer drahtlosen Kommunikationsschnittstelle 24. Weiterhin ist die Anzeige-Einrichtung 21 vorzugsweise verbunden mit der Eingabe-Ausgabe-Einheit 25. Die Steuereinrichtung 26 ist dabei vorzugsweise ausgebildet um sämtliche übrige Einrichtungen zu steuern.

Mittels der Identifikations-Empfangs-Einrichtung 22 (bspw. einer Kamera, o.ä.), kann das Bediengerät 2 Lichtsignale empfangen. Mittels der Anzeige-Einheit 21 und der Eingabe-Ausgabe-Einheit 25 kann eine Interaktion mit einem Nutzer erfolgen. Insbesondere können auf der Anzeige-Einheit 21 Benutzerführungen zur Steuerung der Leuchten angezeigt werden. Darüber hinaus können z.B. mit einem berührungsempfindlichen Bildschirm der Anzeigeeinheit 21 unter Zuhilfenahme der Eingabe-Ausgabe-Einheit 25 Eingaben durch Berührung des Bediengeräts 2 aufgenommen und verarbeitet werden. Mittels der drahtlosen Kommunikationsschnittstelle 24 ist eine Kommunikation mit den Leuchten 10 - 18 und/oder mit dem Steuergerät 3 (soweit vorhanden) aus Fig. 1 möglich.

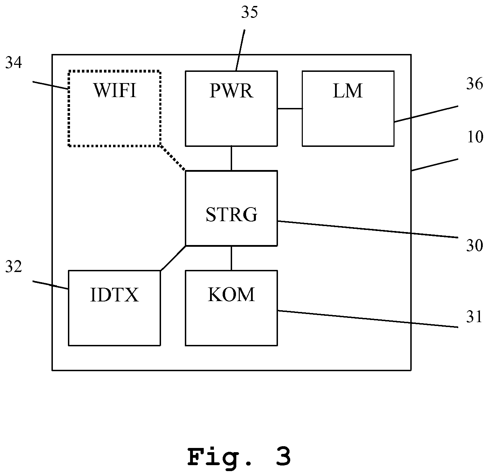

In Fig. 3 ist eine zweite Detailansicht des Ausführungsbeispiels des erfindungsgemäßen Kommunikationssystems 1 gezeigt. Hier dargestellt ist ein Blockschaltbild einer exemplarischen Leuchte 10 aus Fig. 1. Die Leuchte 10 beinhaltet vorzugsweise eine Steuereinheit 30, welche besonders vorzugsweise verbunden ist mit einer Kommunikationsschnittstelle 31, einer Identifikations-Sende-Einheit 32, einer drahtlosen Kommunikationsschnittstelle 34 und einer Stromversorgung 35. Die Stromversorgung 35 ist weiterhin mit einem Leuchtmittel 36 verbunden und kann eine integrierte oder eine externe Stromversorgung/Stromquelle darstellen. Die Steuereinrichtung 30 dient dabei vorzugsweise der Steuerung der mit ihr direkt verbundenen Komponenten. Beispielsweise die drahtlose Kommunikationsschnittstelle 34 ist optional und kann dann vorgesehen sein, wenn eine direkte Kommunikation des Bediengeräts 2 mit den Leuchten 10 - 18 vorgesehen ist. In diesem Fall kann auf die Kommunikationsschnittstelle 31 verzichtet werden. Die Kommunikationsschnittstelle 31 dient vorzugsweise der Kommunikation der jeweiligen Leuchte 10 - 18 mit dem Steuergerät 3 und umgekehrt. Die Identifikations-Sende-Einheit 32 dient vorzugsweise dem Senden bzw. Generieren von Lichtsignalen über ein Leuchtmittel der Leuchte. Dies kann das zur Lichtabgabe der Leuchte vorgesehene Hauptleuchtmittel oder auch ein separat vorgesehenes Leuchtmittel sein. Eine optional vorgesehen Identifikations-Empfangs-Einheit kann vorgesehen sein und dient dann dem Empfangen von (modulierten) Lichtsignalen, welche gemäß einem Ausführungsbeispiel von dem Bediengerät 2 zur Ansteuerung einer entsprechenden Leuchte 10 - 18 ausgesendet wird. Die optional vorgesehene drahtlose Kommunikationsschnittstelle 34 dient vorzugsweise der direkten Kommunikation mit dem Bediengerät 2. Die Stromversorgung 35 dient dem gesteuerten Betrieb des Leuchtmittels 36. Insbesondere kann dabei eine Einstellung des Schaltzustands, des Dimmzustands, der Farbtemperatur und eines Beleuchtungsablaufs erfolgen.

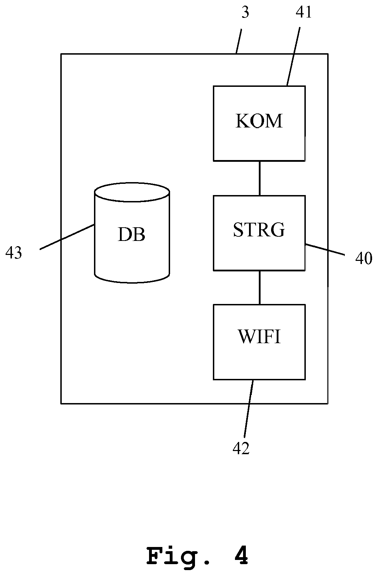

In Fig. 4 ist eine dritte Detailansicht des Ausführungsbeispiels des erfindungsgemäßen Beleuchtungssystems 1 gezeigt. Hier dargestellt ist ein Blockschaltbild des optionalen Steuergeräts 3. Das Steuergerät 3 beinhaltet vorzugsweise eine Steuereinrichtung 40, eine Kommunikationsschnittstelle 41, eine drahtlose Kommunikationsschnittstelle 42 und eine Datenbank 43. Die Steuereinrichtung 40 ist dabei vorzugsweise ausgebildet, um sämtliche übrige Komponenten 41 - 43 zu steuern.

Die Kommunikationsschnittstelle 41 dient vorzugsweise der Kommunikation mit den Leuchten 10 - 18 bspw. via DALI. Die drahtlose Kommunikationsschnittstelle 42 dient vorzugsweise der Kommunikation mit dem Bediengerät 2; insbesondere dann, wenn dieses als mobiles Bediengerät ausgebildet ist und ebenfalls eine drahtlose Kommunikationsschnittstelle (bspw. WLAN-Modul) aufweist. Die Datenbank 43 dient dabei dem Abrufen von Informationen die Leuchten betreffend durch das Bediengerät 2 sowie einer Zuordnung und Authentifizierung eines Steuerbefehls bzgl. einer konkreten und eindeutig zugeordneten Leuchte. Es sei angemerkt, dass auch das Bediengerät 2 die Datenbank aufweisen kann, insbesondere dann, wenn kein Steuergerät 3 vorgesehen ist oder auch dann, wenn es vorgesehen ist und die Authentifizierung schon im Bediengerät 2 erfolgen soll.

Es wird daher an dieser Stelle nochmals daraufhingewiesen, dass das Beleuchtungssystem 1 nicht zwangsläufig ein Steuergerät 3 benötigt. Sofern die Leuchten 10 - 18 jeweils über eine drahtlose Kommunikationsschnittstelle 34 verfügen, kann auf das Steuergerät 3 verzichtet werden. In diesem Fall benötigen die Leuchten 10 - 18 lediglich die drahtlose oder eine andere Kommunikationsschnittstelle 34 zur direkten Kommunikation mit dem Bediengerät, die auch in Form der Schnittstelle 31 ausgebildet sein kann. In diesem Fall kann - wie bereits erwähnt - die Datenbank innerhalb des Bediengeräts 2 angeordnet sein. Alternativ kann sie auch unabhängig von dem Bediengerät und/oder Steuergerät innerhalb des Beleuchtungssystems installiert sein.

In Fig. 5 ist ein erstes Ausführungsbeispiel des erfindungsgemäßen Verfahrens dargestellt. In einem optionalen ersten Schritt 100 wird ein Steuersignal an eine Leuchte gesendet. In einem optionalen zweiten Schritt 101 aktiviert sich die Leuchte für einen (zweiten) Zeitraum t₁. Bei den Schritten 100 und 101 handelt es sich um optionale Schritte, welche beispielsweise nur dann durchgeführt werden, wenn die Leuchte zu Beginn ausgeschaltet ist. Alternativ kann eine Inbetriebnahme der Leuchte auch ermöglicht werden, wenn der Zeitpunkt der Abgabe eines Steuersignals zum Steuern der Leuchte innerhalb eines definierten (ersten) Zeitraumes nach einem letztmaligen Empfang eines Identifikations-Lichtsignals erfolgt. In einem dritten Schritt 102 sendet die Leuchte ein Identifikations-Lichtsignal aus, welches an einen vierten Schritt 103 von dem Bediengerät empfangen wird. In einem fünften Schritt 104 identifiziert das Bediengerät die Leuchte anhand des Identifikations-Lichtsignals und steuert die identifizierte Leuchte in einem sechsten Schritt 105. In diesem Fall ist vorzugsweise die Datenbank im Bediengerät 2 vorgesehen. Das empfangene Identifikations-Lichtsignal wird dabei auf Basis der hinterlegten Datenbank einer oder einer Mehrzahl anhand des Identifikations-Lichtsignals eindeutig identifizierter Leuchten zugeordnet. Nur die identifizierten Leuchten können dann mittels des Bediengerätes gesteuert werden. Beispielsweise kann aufgrund der gewonnen Informationen ein Anlagenabbild auf einem (Touch-)Bildschirm des Bediengerätes 2 abgebildet werden, welches eine intuitive Steuerung ermöglicht. Eine entsprechende Authentifizierung kann beispielsweise in regelmäßigen Abständen (bspw. in Intervallen entsprechend dem (vor-)definierten ersten Zeitraum) oder auch nur bei Ausgabe eines Steuerbefehls durchgeführt werden.

Es ist überdies auch denkbar, dass das Bediengerät 2 ein der Leuchte 10 - 18 entsprechendes Identifikations-Lichtsignal oder ein davon abgeleitetes Signal zusammen mit einem gewünschten Steuersignal ausgibt. Die Leuchten 10 - 18 empfangen dann die Steuersignale und nur diejenigen werden auch tatsächlich angesteuert, welche eine Übereinstimmung des bzw. vordefinierte Zuordnung mit dem vom Bediengerät 2 ausgegebenen Signal mit ihrem eigenen Identifikations-Lichtsignal feststellen.

In Fig. 6 ist ein zweites Ausführungsbeispiel des erfindungsgemäßen Verfahrens gezeigt. Hier ist auf die Schritte 100 und 101 aus Fig. 5 verzichtet worden. Diese können jedoch ebenfalls zuvor hier ausgeführt werden.

In einem ersten Schritt 200 sendet eine Leuchte 10 - 18 ein Identifikations-Lichtsignal, welches in einem zweiten Schritt 201 von einem (mobilen) Bediengerät 2 empfangen wird. In einem optionalen dritten Schritt 202 identifiziert das Bediengerät die Leuchte anhand des Identifikations-Lichtsignals (bspw. aufgrund von einem Abgleich des Signals mit einer Datenbank). Vor oder nach dem optionalen dritten Schritt wandelt in einem vierten Schritt 203 das Bediengerät 2 das Identifikations-Lichtsignal der Leuchte 10 - 18 in ein abgeleitetes (digitales) Signal um; hierzu kann auf ein entsprechendes Programm oder die vorgenannte Datenbank zurückgegriffen werden, in welcher entsprechende Daten hinterlegt sind. In einem fünften Schritt 204 sendet das Bediengerät 2 ein Steuersignal und ein von dem Identifikations-Lichtsignal abgeleitetes (digitales) Signal an ein Steuergerät 3. Dieses wird in einem sechsten Schritt 205 von dem Steuergerät empfangen und überprüft (bspw. durch Abgleich des Signals mit in einer Datenbank hinterlegten und jeder leuchte eindeutig zuordenbaren Informationen. Sofern die Überprüfung positiv verläuft, also das Signal einer Leuchte bzw. mehrere Signale einer entsprechenden Anzahl an Leuchten eindeutig zugeordnet werden kann, steuert das Steuergerät die Leuchte; insbesondere dann, wenn das Identifikations-Lichtsignal der anzusteuernden Leuchte(n) 10 - 18 zum Zeitpunkt der Abgabe des Steuersignals zum Steuern der Leuchten oder innerhalb eines definierten Zeitraums davor von der Identifikations-Empfangs-Einheit 22 des Bediengeräts 2 empfangen wurde.

Es sei an dieser Stelle darauf hingewiesen, dass auch mehrere Leuchten einer (vordefinierten Gruppe zugeordnet werden kann, die ein gemeinsames bzw. identisches Identifikations-Lichtsignal absetzen und somit als Gruppe zusammen angesteuert werden können, wenn eine Authentifizierung eines Steuerbefehls für entsprechende Leuchten stattgefunden hat. Auch kann das abgeleitete Signal ein kombiniertes Signal für eine Gruppe von empfangenen Identifikations-Lichtsignalen sein, wobei bspw. in der Datenbank entsprechende Informationen hinterlegt sind, die eine Authentifizierung der Ansteuerung dieser Gruppe von Leuchten ermöglicht, wenn dieses kombinierte aber eindeutig der Gruppe von Leuchten zuordenbare Signal empfangen wird.

Das Prinzip der vorliegenden Erfindung ist es daher eine Leuchteninstallation derart auszustatten, dass die Leuchten mittels Datenübertragung beispielsweise durch sichtbares Licht (engl. "Visible Light Communication") ein eindeutiges Identifikationssignal versenden (z.B. die MAC-Adresse des in der Steuereinheit verbauten Mikrocontrollers). Dieses kann dann wiederum mittels eines geeigneten lichtempfindlichen Empfängers (bspw. Photodioden, Kameras, Helligkeitssensoren, Farbsensoren, etc. insbesondere in Handys (Smartphones), Tablets, etc.) erfasst werden. Beispielsweise durch im System auf einer Datenbank hinterlegte Zugriffsrechte kann dann z.B. sichergestellt werden, dass nur berechtigte Leuchten durch das Bediengerät gesteuert werden können. Insbesondere kann durch die Verwendung von sichtbarem Licht als Übertragungsmedium sichergestellt werden, dass nur solche Leuchten gesteuert werden, die in sichtbarer Umgebung des Bediengerätes sind oder innerhalb des definierten ersten Zeitraumes waren. Hierdurch kann z.B. eine Leuchte, die sich auf einer anderen Seite einer Wand im Nachbarraum befindet oder in deren Sichtbereich das Bediengerät nicht oder seit zu langer Zeit (> erster Zeitraum) nicht gelangt ist, nicht von dem Bediengerät detektiert werden und damit das unabsichtliche Steuern von Leuchten in Nachbarräumen verhindert werden. Darüber hinaus können Zusatzfunktionalitäten eingebaut werden, wie z.B., dass nur Leuchten gesteuert werden können, deren Lichtpegel einen bestimmten Wert überschreitet oder deren Signal andere Anforderungen erfüllt, durch die eine genauere Ortseingrenzung ermöglicht wird.

Die Erfindung ist nicht auf die dargestellten Ausführungsbeispiele beschränkt. Insbesondere können unterschiedlichste Kommunikationspfade zwischen dem Bediengerät und den Leuchten, dem Bediengerät und einem Steuergerät sowie dem Steuergerät und den Leuchten eingesetzt werden. Diese können bspw. drahtlos oder drahtgebunden sein. Die Datenbank kann auf dem Bediengerät und/oder dem Steuergerät und/oder an anderer Stelle in dem Beleuchtungssystem vorgesehen sein. Das Bediengerät kann mobil oder auch fest installiert sein. Alle vorstehend beschriebenen Merkmale und in den Figuren gezeigten Merkmale sind im Rahmen der Erfindung beliebig vorteilhaft miteinander kombinierbar.

## Patentansprüche

1. Beleuchtungssystem mit einem vorzugsweise mobilen Bediengerät (2) und einer Mehrzahl von Leuchten (10 - 18), wobei das Bediengerät (2) ausgebildet ist, um die Leuchten (10 - 18) zu steuern, wobei die Leuchten (10 - 18) jeweils eine Identifikations-Sende-Einheit (32) aufweisen, welche ausgebildet ist, um die jeweilige Leuchte (10 - 18) zumindest zeitweilig derart zu steuern, dass die Leuchte (10 - 18) ein die jeweilige Leuchte (10 - 18) eindeutig identifizierendes Identifikations-Lichtsignal abgibt, wobei das Bediengerät (2) eine Identifikations-Empfangs-Einheit (22) aufweist, welche ausgebildet ist, um die Identifikations-Lichtsignale der Leuchten (10 - 18) zu empfangen, und wobei das Beleuchtungssystem (1) derart ausgebildet ist, dass lediglich Leuchten (10 - 18) durch das Bediengerät (2) steuerbar sind, deren Identifikations-Lichtsignal zum Zeitpunkt der Abgabe eines Steuersignals zum Steuern der Leuchten oder innerhalb eines definierten ersten Zeitraums davor von der Identifikations-Empfangs-Einheit (22) des Bediengeräts (2) empfangen wird, **dadurch gekennzeichnet, dass** die Leuchten (10 - 18) ausgebildet sind, um bei einer Steuerung der jeweiligen Leuchte (10 - 18) ausgehend von einem ausgeschalteten Zustand der Leuchte (10 - 18)
- unabhängig von einer Übermittlung eines von dem zugehörigen Identifikations-Lichtsignal abgeleiteten Signals durch das Bediengerät (2) für einen zweiten Zeitraum in einen eingeschalteten Zustand zu schalten, und währenddessen mittels der Identifikations-Sende-Einheit (32) der Leuchte (10 - 18) das Identifikations-Lichtsignal auszusenden,
- die Steuerung von der zuvor ausgeschalteten Leuchte (10 - 18) zu akzeptieren, wenn während des zweiten Zeitraums eine erfolgreiche Übermittlung eines von dem Identifikations-Lichtsignal abgeleiteten Signals durch das Bediengerät (2) zustande kommt, und
- erneut in den ausgeschalteten Zustand zu wechseln, wenn bis zum Ende des zweiten Zeitraums keine Übermittlung eines von dem zugehörigen Identifikations-Lichtsignal abgeleiteten Signals erfolgt ist.

2. Beleuchtungssystem nach Anspruch 1,
**dadurch gekennzeichnet,**
**dass** das Beleuchtungssystem (1) weiterhin eine Datenbank (43) aufweist, in welcher die Identifikations-Lichtsignale und/oder hiervon abgeleitete Signale der jeweiligen Leuchten (10 - 18) und zusätzliche Informationen der jeweiligen Leuchten (10 - 18) abgespeichert sind, und
**dass** das Bediengerät (2) ausgebildet ist, um nach einem Empfang eines Identifikations-Lichtsignals mittels einer Abfrage der Datenbank (43) zumindest einen Teil der zusätzlichen Informationen der jeweiligen Leuchten (10 - 18) abzurufen und/oder ausschließlich eine dem Identifikations-Lichtsignal eindeutig zugeordnete Leuchte (10 - 18) zu steuern.

3. Beleuchtungssystem nach Anspruch 2,
**dadurch gekennzeichnet,**
**dass** die zusätzlichen Informationen der jeweiligen Leuchten (10 - 18) eine Leuchtenadressierung beinhalten, und
**dass** das Bediengerät (2) ausgebildet ist, um die jeweilige Leuchte (10 - 18) anhand ihrer Leuchtenadressierung zu steuern.

4. Beleuchtungssystem nach Anspruch 2 oder 3,
**dadurch gekennzeichnet,**
**dass** die zusätzlichen Informationen der jeweiligen Leuchten (10 - 18) eine Position der Leuchte (10 - 18) beinhalten, und
**dass** das Bediengerät (2) über eine Anzeigeeinheit (21) verfügt, welche ausgebildet ist, um die Positionen der Leuchten (10 - 18) anzuzeigen.

5. Beleuchtungssystem nach einem der Ansprüche 2 bis 4,
**dadurch gekennzeichnet,**
**dass** die zusätzlichen Informationen der jeweiligen Leuchten (10 - 18) verfügbare Steuermöglichkeiten der Leuchte (10 - 18) beinhalten,
**dass** die Steuermöglichkeiten einen Schaltzustand und/oder einen Dimmzustand und/oder eine Farbtemperatur und/oder einen Beleuchtungsablauf beinhalten können, und
**dass** das Bediengerät (2) ausgebildet ist, um lediglich für die jeweilige Leute (10 - 18) verfügbare Steuermöglichkeiten mittels einer Anzeigeeinheit (21) anzuzeigen.

6. Beleuchtungssystem nach einem der Ansprüche 1 bis 5,
**dadurch gekennzeichnet,**
**dass** das Bediengerät über eine drahtlose Kommunikationsschnittstelle (24) verfügt, und
**dass** die Steuerung der Leuchten (10 - 18) durch das Bediengerät mittels der drahtlosen Kommunikationsschnittstelle (24) des Bediengeräts (2) erfolgt.

7. Beleuchtungssystem nach Anspruch 6 in Verbindung mit einem der Ansprüche 2 bis 5,
**dadurch gekennzeichnet,**
**dass** das Bediengerät (2) ausgebildet ist, um Steuerbefehle zur Steuerung der Leuchten (10 - 18) sowie von den empfangenen Identifikations-Lichtsignalen abgeleitete Signale mittels der Kommunikationsschnittstelle (24) an eine mit den Leuchten (10 - 18) steuerungstechnisch korrespondierende Kommunikationsschnittstelle (34, 42) zu senden, wobei das Beleuchtungssystem derart ausgebildet ist, um eine Steuerung einer Leuchte (10 - 18) durch das Bediengerät (2) nur dann zu akzeptieren, wenn das abgeleitete Signal dem Identifikations-Lichtsignal dieser Leuchte (10 - 18) eindeutig zuordenbar ist, wobei das abgeleitete Signal vorzugsweise basierend auf der im Beleuchtungssystem hinterlegten Datenbank (43) eindeutig einer zu steuernden Leuchte (10 - 18) zuordenbar ist.

8. Beleuchtungssystem nach Anspruch 6 oder 7,
**dadurch gekennzeichnet,**
**dass** die Leuchten (10 - 18) jeweils über eine drahtlose Kommunikationsschnittstelle (34) verfügen,
**dass** die Steuerung der Leuchten (10 - 18) durch das Bediengerät (2) direkt mittels der drahtlosen Kommunikationsschnittstellen (24, 34) des Bediengeräts (2) und der Leuchten (10 - 18) erfolgt,
**dass** das Bediengerät (2) ausgebildet ist, um mittels der drahtlosen Kommunikationsschnittstellen (24, 34) von empfangenen Identifikations-Lichtsignalen abgeleitete Signale an die Leuchten (10 - 18) zu senden, und
**dass** die Leuchten (10 - 18) ausgebildet sind, um eine Steuerung durch das Bediengerät (2) nur dann zu akzeptieren, wenn die jeweilige Leuchte (10 - 18) ein von dem jeweils ausgesendeten Identifikations-Lichtsignal abgeleitetes Signal empfängt.

9. Beleuchtungssystem nach Anspruch 8,
**dadurch gekennzeichnet,**
**dass** die Leuchten (10 - 18) ausgebildet sind, um nach einem Verstreichen des zweiten Zeitraums während eines auf den zweiten Zeitraum folgenden dritten Zeitraums nicht auf eine Steuerung durch das Bediengerät (2) zu reagieren.

10. Beleuchtungssystem nach Anspruch 6 oder 7,
**dadurch gekennzeichnet,**
**dass** das Beleuchtungssystem (1) ein Steuergerät (3) aufweist, welches eine drahtlose Kommunikationsschnittstelle (42) zur Kommunikation mit dem Bediengerät (2) aufweist, wobei das Steuergerät (3) ausgebildet ist, um die Leuchten (10 - 18) direkt zu steuern, und wobei das Bediengerät (2) ausgebildet ist, um mittelbar über das Steuergerät (3) die Leuchten (10 - 18) zu steuern, und
**dass** das Bediengerät (2) ausgebildet ist, um mittels der drahtlosen Kommunikationsschnittstellen (24, 42) von empfangenen Identifikations-Lichtsignalen abgeleitete Signale an das Steuergerät (3) zu senden, und
**dass** das Steuergerät (3) ausgebildet ist, um eine Leuchte (10 - 18) lediglich dann zu steuern, wenn das Steuergerät (3) ein von dem ausgesendeten Identifikations-Lichtsignal der Leuchte (10 - 18) abgeleitetes Signal empfängt.

11. Beleuchtungssystem nach Anspruch 10,
**dadurch gekennzeichnet,**
**dass** das Steuergerät (3) ausgebildet ist, um nach einem Verstreichen des zweiten Zeitraums während eines auf den zweiten Zeitraum folgenden dritten Zeitraums nicht auf eine Bedienung der Leuchten (10 - 18) durch das Bediengerät (2) zu reagieren.

12. Beleuchtungssystem nach einem der Ansprüche 1 bis 11,
**dadurch gekennzeichnet,**
**dass** das Beleuchtungssystem (1) derart ausgebildet ist, dass nur Leuchten (10 - 18) steuerbar sind, deren jeweilige Identifikations-Lichtsignale von der Identifikations-Empfangs-Einheit (22) des Bediengeräts (2) mit einer Lichtintensität empfangen werden, welche größer als ein vorbestimmter Schwellwert ist.

13. Beleuchtungssystem nach einem der Ansprüche 1 bis 12,
**dadurch gekennzeichnet,**
**dass** die Identifikations-Lichtsignale der Leuchten (10 - 18) eine Modulation eines von den Leuchten (10 - 18) zur Beleuchtung abgestrahlten Lichts sind, und/oder dass die Identifikations-Lichtsignale Visible-Light-Communication Signale sind.

14. Beleuchtungssystem nach einem der Ansprüche 1 bis 13,
**dadurch gekennzeichnet,**
**dass** der definierte Zeitraum höchstens 10 Minuten, bevorzugt höchstens 1 Minute, besonders bevorzugt höchstens 20 Sekunden beträgt.

15. Verfahren zum Betreiben eines Beleuchtungssystems mit einem Bediengerät (2) und einer Mehrzahl von Leuchten (10 - 18), wobei das Bediengerät (2) die Leuchten (10 - 18) steuert, wobei die Leuchten (10 - 18) zumindest zeitweilig ein die jeweilige Leuchte (10 - 18) eindeutig identifizierendes Identifikations-Lichtsignal abgeben, wobei Identifikations-Lichtsignale wenigstens einer oder mehrerer der Leuchten (10 - 18) von dem Bediengerät (2) empfangen werden, wobei das Bediengerät (2) lediglich Leuchten (10 - 18) steuert, deren Identifikations-Lichtsignal zum Zeitpunkt der Abgabe eines Steuersignals zum Steuern der Leuchten oder innerhalb eines definierten ersten Zeitraums davor von dem Bediengerät (2) empfangen wird, **dadurch gekennzeichnet, dass** unabhängig von einer Übermittlung eines von dem zugehörigen Identifikations-Lichtsignal abgeleiteten Signals durch das Bediengerät (2) für einen zweiten Zeitraum in einen eingeschalteten Zustand geschalten wird, und währenddessen mittels der Identifikations-Sende-Einheit (32) der Leuchte (10 - 18) das Identifikations-Lichtsignal ausgesendet wird,
dass die Steuerung von der zuvor ausgeschalteten Leuchte (10 - 18) akzeptiert wird, wenn während des zweiten Zeitraums eine erfolgreiche Übermittlung eines von dem Identifikations-Lichtsignal abgeleiteten Signals durch das Bediengerät (2) zustande kommt. und
dass erneut in den ausgeschalteten Zustand gewechselt wird, wenn bis zum Ende des zweiten Zeitraums keine Übermittlung eines von dem zugehörigen Identifikations-Lichtsignal abgeleiteten Signals erfolgt ist.

## Claims

1. A lighting system with a preferably mobile operating device (2) and a plurality of luminaires (10-18), wherein the operating device (2) is designed in order to control the luminaires (10-18),
wherein the luminaires (10-18) in each case have an identification- transmitting unit (32), which is designed, in order to control the respective luminaire (10-18) at least temporarily in such a manner that the luminaire (10-18) emits an identification light signal clearly identifying the respective luminaire (10-18),
wherein the operating device (2) has an identification-receiving unit (22), which is designed, in order to receive the identification light signals of the luminaires (10-18), and
wherein the lighting system (1) is designed in such a manner that only luminaires (10-18) can be controlled by the operating device (2), the identification light signal of which is received by the identification-receiving unit (22) of the operating device (2) at the time of the emission of a control signal for controlling the luminaires or within a defined first time period prior to that,
**characterized in that**
the luminaires (10-18) are designed, in order to switch in a control of the respective luminaire (10-18) from a switched-off state of the luminaire (10-18) - independent of a transmission of a signal derived from the associated identification light signal by the operating device (2) for a second time period into a switched-on state, and in the meantime transmit the identification light signal by means of the identification-transmitting unit (32) of the luminaire (10-18),
- to accept the control of the previously switched-off luminaire (10-18), if during the second time period a successful transmission of a signal derived from the identification light signal by the operating device (2) occurs, and
- to switch back into the switched-off state, if at the end of the second time period no transmission of a signal derived from the associated identification light signal has occurred.

2. A lighting system according to Claim 1,
**characterized in**
**that** the lighting system (1) furthermore has a data base (43), in which the identification light signals and/or signals of the respective luminaires (10-18) derived therefrom and additional information of the respective luminaires (10-18) are stored, and
**that** the operating device (2) is designed, in order to retrieve at least a part of the additional information of the respective luminaires (10-18) after a reception of an identification light signal by means of a query of the data base (43) and/or to control exclusively one luminaire (10-18) clearly assigned to the identification light signal.

3. A lighting system according to Claim 2,
**characterized in**
**that** the additional information of the respective luminaires (10-18) includes a luminaire addressing, and
**that** the operating device (2) is designed, in order to control the respective luminaire (10-18) using its luminaire addressing.

4. A lighting system according to Claim 2 or 3,
**characterized in**
**that** the additional information of the respective luminaires (10-18) includes a position of the luminaire (10-18), and
**that** the operating device has a display unit (21), which is designed, in order to display the positions of the luminaires (10-18).

5. A lighting system according to any one of Claims 2 to 4,
**characterized in**
**that** the additional information of the respective luminaires (10-18) includes available control possibilities of the luminaires (10-18),
**that** the control possibilities can include a switching state and/or a dimming state and/or a color temperature and/or an illumination sequence, and
**that** the operating device (2) is designed in order to display available control possibilities only for the respective luminaire (10-18) by means of a display unit (21).

6. A lighting system according to any one of Claims 1 to 5,
**characterized in**
**that** the operating device has a wireless communication interface (24), and that the control of the luminaires (10-18) takes place by the operating device by means of the wireless communication interface (24) of the operating device (2).

7. A lighting system according to Claim 6 in conjunction with any one of Claims 2 to 5,
**characterized in**
**that** the operating device (2) is designed, in order to send control commands for controlling the luminaires (10-18) as well as signals derived from the received identification light signals by means of the communication interface (24) to a communication interface (34, 42) corresponding in terms of control with the luminaires (10-18), wherein the lighting system is designed in such a manner in order to accept a control of a luminaire (10-18) by the operating device (2) only when the derived signal can be clearly assigned to the identification light signal of said luminaire (10-18), wherein the derived signal preferably based on the data base (43) stored in the lighting system can be clearly assigned to a luminaire (10-18) to be controlled.

8. A lighting system according to Claim 6 or 7,
**characterized in**
**that** the luminaires (10-18) in each case have a wireless communication interface (34),
**that** the control of the luminaires (10-18) by the operating device (2) takes place directly by means of the wireless communication interfaces (24, 34) of the operating device (2) and the luminaires (10-18),
**that** the operating device (2) is designed in order to send signals derived from received identification light signals to the luminaires (10-18) by means of the wireless communication interfaces (24, 34), and
**that** the luminaires (10-18) are designed in order to accept a control by the operating device (2) only when the respective luminaire (10-18) receives a signal derived from the respectively emitted identification light signal.

9. A lighting system according to Claim 8,
**characterized in**
**that** the luminaires (10-18) are designed in order not to respond to a control by the operating device (2) after an elapse of the second time period during a third time period following the second time period.

10. A lighting system according to Claim 6 or 7,
**characterized in**
**that** the lighting system (1) has a control device (3), which has a wireless communication interface (42) for communication with the operating device (2), wherein the operating device (2) is designed, in order to control the luminaires (10-18) indirectly via the control device (3), and
**that** the operating device (2) is designed, in order to send signals derived from received identification light signals to the control device (3) by means of the wireless communication interfaces (24, 42), and
**that** the control device (3) is designed, in order to control a luminaire (10-18) only when the control device (3) receives a signal derived from the emitted identification light signal of the luminaire (10-18).

11. A lighting system according to Claim 10,
**characterized in**
**that** the control device (3) is designed, in order not to respond to the operation of the luminaires (10-18) by the operating device (2) after an elapse of the second time period during a third time period following the second time period.

12. A lighting system according to any one of Claims 1 to 11,
**characterized in**
**that** the lighting system (1) is designed in such a manner that only luminaires (10-18) can be controlled, the respective identification light signals of which are received by the identification-receiving unit (22) of the operating device (2) with a light intensity, which is greater than a predetermined threshold value.

13. A lighting system according to any one of Claims 1 to 12,
**characterized in**
**that** the identification light signals of the luminaires (10-18) are a modulation of a light emitted from the luminaires (10-18) for the illumination, and/or
**that** the identification light signals are visible light communication signals.

14. A lighting system according to any one of Claims 1 to 13,
**characterized in**
**that** the defined time period is at most 10 minutes, preferably at most 1 minute, most preferably at most 20 seconds.

15. A method for operating a lighting system with an operating device (2) and a plurality of luminaires (10-18), wherein the operating device (2) controls the luminaires (10-18),
wherein
the luminaires (10-18) at least temporarily emit an identification light signal clearly identifying the respective luminaires (10-18),
wherein identification light signals at least of one or several of the luminaires (10-18) are received by the operating device (2),
wherein the operating device (2) controls only luminaires (10-18) the identification light signal of which is received for the time period of the emission of the control signal for the control of the luminaires or within a defined first time period before that by the operating device (2),
**characterized in that**
independent of a transmission of a signal derived from the associated identification light signal said luminaire is switched by the operating device (2) into a switched-on state, and in the meantime the identification light signal is transmitted by means of the identification transmitting unit (32) of the luminaire (10-18),
that the control of the previously switched-off luminaire (10-18) is accepted, if during the second time period a successful transmission of a signal derived from the identification light signal by the operating device (2) occurs, and
that it is switched back into the switched-off state, if at the end of the second time period no transmission of a signal derived from the associated identification light signal has occurred.

## Revendications

1. Système d'éclairage avec un appareil de manoeuvre (2) de préférence mobile et une pluralité de luminaires (10-18), l'appareil de manoeuvre (2) étant constitué pour commander les luminaires (10-18),
les luminaires (10-18) comportant respectivement une unité d'émission d'identification (32) qui est constituée pour commander au moins temporairement le luminaire (10-18) respectif de telle sorte que le luminaire (10-18) délivre un signal lumineux d'identification identifiant clairement le luminaire (10-18) respectif,
l'appareil de manoeuvre (2) comportant une unité de réception d'identification (22) qui est constituée pour recevoir les signaux lumineux d'identification des luminaires (10-18), et le système d'éclairage (1) étant constitué de telle sorte que ne peuvent être commandés par l'appareil de manoeuvre (2) que les luminaires (10-18) dont le signal lumineux d'identification est reçu par l'unité de réception d'identification (22) de l'appareil de manoeuvre (2) au moment de la délivrance d'un signal de manoeuvre destiné à commander les luminaires ou à l'intérieur d'une première période de temps définie auparavant,
**caractérisé en ce que**
les luminaires (10-18) sont constitués pour, lors d'une commande du luminaire (10-18) respectif, en partant d'un état mis hors circuit du luminaire (10-18)
- réaliser, pour une deuxième période de temps, une commutation vers un état mis en circuit indépendamment d'une transmission par l'appareil de manoeuvre (2) d'un signal dérivé à partir du signal lumineux d'identification correspondant, et pour pendant cela émettre le signal lumineux d'identification au moyen de l'unité d'émission d'identification (32) du luminaire (10-18),
- pour accepter la commande du luminaire (10-18) mis hors circuit auparavant si, pendant la deuxième période de temps, une transmission réussie d'un signal dérivé à partir du signal lumineux d'identification est réalisée par l'appareil de manoeuvre (2),
- repasser au mode mis hors circuit si, jusqu'à la fin de la deuxième période de temps, aucune transmission d'un signal dérivé à partir du signal lumineux d'identification correspondant n'a eu lieu.

2. Système d'éclairage selon la revendication 1,
**caractérisé en ce que**
le système d'éclairage (1) comporte en outre une base de données (43) dans laquelle sont enregistrés les signaux lumineux d'identification et/ou des signaux, qui en sont dérivés, des luminaires (10-18) respectifs et des informations supplémentaires des luminaires (10-18) respectifs, et
**en ce que** l'appareil de manoeuvre (2) est constitué pour, après une réception d'un signal lumineux d'identification, au moyen d'une interrogation de la base de données (43), appeler au moins une partie des informations supplémentaires des luminaires (10-18) respectifs et/ou pour commander exclusivement un luminaire (10-18) affecté clairement au signal lumineux d'identification.

3. Système d'éclairage selon la revendication 2,
**caractérisé en ce que**
les informations supplémentaires des luminaires (10-18) respectifs contiennent un adressage de luminaires, et
**en ce que** l'appareil de manoeuvre (2) est constitué pour commander le luminaire (10-18) respectif à l'aide de son adressage de luminaires.

4. Système d'éclairage selon la revendication 2 ou 3, **caractérisé en ce que**
les informations supplémentaires des luminaires (10-18) respectifs contiennent une position du luminaire (10-18), et
**en ce que** l'appareil de manoeuvre (2) dispose d'une unité d'affichage (21) qui est constituée pour afficher les positions des luminaires (10-18).

5. Système d'éclairage selon l'une des revendications 2 à 4, **caractérisé en ce que**
les informations supplémentaires des luminaires (10-18) respectifs contiennent des possibilités de commande disponibles du luminaire (10-18),
**en ce que** les possibilités de commande peuvent contenir un état de commutation et/ou un état de gradation et/ou une température de couleur et/ou une séquence d'éclairage, et
**en ce que** l'appareil de manoeuvre (2) est constitué pour afficher des possibilités de commande disponibles au moyen d'une unité d'affichage (21) uniquement pour le luminaire (10-18) respectif.

6. Système d'éclairage selon l'une des revendications 1 à 5,
**caractérisé en ce que**
l'appareil de manoeuvre dispose d'une interface de communication (24) sans fil, et
**en ce que** la commande des luminaires (10-18) par l'appareil de manoeuvre s'effectue au moyen de l'interface de communication (24) sans fil de l'appareil de manoeuvre (2).

7. Système d'éclairage selon la revendication 6 en liaison avec l'une des revendications 2 à 5
**caractérisé en ce que**
l'appareil de manoeuvre (2) est constitué pour, au moyen de l'interface de communication (24), envoyer à une interface de communication (34, 42) correspondant au plan de la technique de commande avec les luminaires (10-18) des instructions de manoeuvre pour la commande des luminaires (10-18) ainsi que des signaux dérivés à partir des signaux lumineux d'identification reçus, le système d'éclairage étant constitué de façon à n'accepter une commande du luminaire (10-18) par l'appareil de manoeuvre (2) que si le signal dérivé peut être affecté clairement au signal lumineux d'identification de ce luminaire (10-18), le signal dérivé pouvant être affecté clairement à un luminaire (10-18) à commander de préférence sur la base de la base de données (43) stockée dans le système d'éclairage.

8. Système d'éclairage selon la revendication 6 ou 7,
**caractérisé en ce que**
les luminaires (10-18) disposent respectivement d'une interface de communication (34) sans fil,
**en ce que** la commande des luminaires (10-18) par l'appareil de manoeuvre (2) s'effectue directement au moyen des interfaces de communication (24, 34) sans fil de l'appareil de manoeuvre (2) et des luminaires (10-18),
**en ce que** l'appareil de manoeuvre (2) est constitué pour, au moyen des interfaces de communication (24, 34) sans fil, envoyer aux luminaires (10-18) des signaux dérivés à partir de signaux lumineux d'identification reçus, et
**en ce que** les luminaires (10-18) sont constitués pour n'accepter une commande par l'appareil de manoeuvre (2) que si le luminaire (10-18) respectif reçoit un signal dérivé à partir du signal lumineux d'identification émis respectif.

9. Système d'éclairage selon la revendication 8,
**caractérisé en ce que**
les luminaires (10-18) sont constitués pour, après une expiration de la deuxième période de temps, ne pas réagir à une commande par l'appareil de manoeuvre (2) pendant une troisième période de temps suivant la deuxième période de temps.

10. Système d'éclairage selon la revendication 6 ou 7,
**caractérisé en ce que**
le système d'éclairage (1) comporte un appareil de commande (3) qui comporte une interface de communication (42) sans fil pour la communication avec l'appareil de manoeuvre (2), l'appareil de commande (3) étant constitué pour commander directement les luminaires (10-18), et l'appareil de manoeuvre (2) étant constitué pour commander les luminaires (10-18) indirectement par le biais de l'appareil de commande (3), et
**en ce que** l'appareil de manoeuvre (2) est constitué pour, au moyen des interfaces de communication (24, 42) sans fil, envoyer à l'appareil de commande (3) des signaux dérivés à partir de signaux lumineux d'identification reçus, et
**en ce que** l'appareil de commande (3) est constitué pour ne commander un luminaire (10-18) qui si l'appareil de commande (3) reçoit un signal lumineux d'identification des luminaires (10-18) émis du luminaire (10-18).

11. Système d'éclairage selon la revendication 10,
**caractérisé en ce que**
l'appareil de commande (3) est constitué pour, après une expiration de la deuxième période de temps, ne pas réagir à une manoeuvre des luminaires (10-18) par l'appareil de manoeuvre (2) pendant une troisième période de temps suivant la deuxième période de temps.

12. Système d'éclairage selon l'une des revendications 1 à 11,
**caractérisé en ce que**
le système d'éclairage (1) est constitué de telle sorte que ne peuvent être commandés que des luminaires (10-18) dont des signaux lumineux d'identification respectifs sont reçus par l'unité de réception d'identification (22) de l'appareil de manoeuvre (2) avec une intensité lumineuse qui est supérieure à une valeur de seuil prédéfinie.

13. Système d'éclairage selon l'une des revendications 1 à 12,
**caractérisé en ce que**
les signaux lumineux d'identification des luminaires (10-18) sont une modulation d'une lumière émise par les luminaires (10-18) pour l'éclairage, et/ou
**en ce que** les signaux lumineux d'identification sont des signaux de communication par lumière visible.

14. Système d'éclairage selon l'une des revendications 1 à 13,
**caractérisé en ce que**
la période de temps définie est de 10 minutes maximum, de préférence de 1 minute maximum, de façon particulièrement préférée de 20 secondes maximum.

15. Procédé de fonctionnement d'un système d'éclairage avec un appareil de manoeuvre (2) et une pluralité de luminaires (10-18), l'appareil de manoeuvre (2) commandant les luminaires (10-18), les luminaires (10-18) délivrant au moins temporairement un signal lumineux d'identification identifiant clairement le luminaire (10-18) respectif,
des signaux lumineux d'identification d'au moins un ou de plusieurs des luminaires (10-18) étant reçus par l'appareil de manoeuvre (2),
l'appareil de manoeuvre (2) ne commandant que des luminaires (10-18) dont le signal lumineux d'identification est reçu au moment de la délivrance d'un signal de commande pour la commande des luminaires ou à l'intérieur d'une première période de temps définie auparavant,
**caractérisé en ce que**,
indépendamment d'une transmission par l'appareil de manoeuvre (2) d'un signal dérivé à partir du signal lumineux d'identification correspondant il est réalisé, pour une deuxième période de temps, une commutation vers un état mis en circuit et, pendant cela, le signal lumineux d'identification est émis au moyen de l'unité d'émission d'identification (32) du luminaire (10-18),
**en ce que** la commande du luminaire (10-18) mis hors circuit auparavant est acceptée si, pendant la deuxième période de temps, une transmission réussie d'un signal dérivée à partir du signal lumineux d'identification est réalisée par l'appareil de manoeuvre (2), et
**en ce que**, il a de nouveau passage au mode mis hors circuit si, jusqu'à la fin de la deuxième période de temps, aucune transmission d'un signal dérivé à partir du signal lumineux d'identification correspondant n'a eu lieu.
